# EUROPÄISCHE PATENTSCHRIFT

(11) **EP 0 448 807 B1**
(45) Veröffentlichungstag und Bekanntmachung des Hinweises auf die Patenterteilung: **30.03.1994**
(21) Anmeldenummer: 90124179.4
(22) Anmeldetag: 14.12.1990
(51) Int. Cl.: B60H 1/26, B60J 7/08

(54) **Belüftungsvorrichtung für ein Fahrzeugdach**
Ventilation device for a vehicle roof
Dispositif de ventilation pour un toit de véhicule

(30) Priorität: 28.03.1990 DE 4009871
(43) Veröffentlichungstag der Anmeldung: 02.10.1991
(73) Patentinhaber: Webasto AG Fahrzeugtechnik, D-82131 Stockdorf (DE)
(72) Erfinder: Jardin, Hans, W-8084 Inning (DE); Paetz, Werner, W-8050 Freising (DE)

(56) Entgegenhaltungen:
- EP-A- 0 229 903
- US-A- 5 003 866
- Patent Abstracts of Japan, vol. 13, no. 193 (M-822)(3541), 9. Mai 1989; & JP-A-62 176587 (Nissan) 23. Januar 1989

## Beschreibung

Die Erfindung bezieht sich auf eine Belüftungsvorrichtung mit einer Lüfteranordnung, die aus einer Bordstromquelle gespeist ist, für ein Fahrzeugdach, das mindestens einen starren Deckel zum wahlweisen Verschließen oder mindestens teilweisen Freilegen einer Dachöffnung aufweist.

Bei einer bekannten Belüftungsvorrichtung dieser Art (DE-A-36 43 436, Fign. 1, 2 und 5) ist die Lüfteranordnung in Form eines Querstromgebläses in den Deckel integriert, wobei der Deckel mit einem sich über einen wesentlichen Teil seiner Breite erstreckenden Luftdurchtrittsschlitz versehen ist, dessen Rand von dem Gehäuse des Querstromgebläses beidseitig umgriffen ist. Das Gebläsegehäuse bildet auf der Deckelinnenseite einen radialen Ansaug- oder Ausblaskanal sowie auf der Deckelaußenseite einen tangential gerichteten Ausblas- bzw. Ansaugkanal. Letzterer kann gegebenenfalls durch einen Schieber, eine einsetzbare Scheibe oder dergleichen verschlossen werden. Entsprechend einer abgewandelten Ausführungsform (DE-A-36 43 436, Fign. 3, 4 und 6) ist das Querstromgebläse in ähnlicher Weise in einem Windabweiser untergebracht, der vor dem vorderen Rand der Dachöffnung auf die feste Dachhaut aufgesetzt ist. Ein Luftstrom kann dabei durch einen Spalt hindurch gefördert werden, der entsteht, wenn der Deckel aus der Schließstellung heraus ein kurzes Stück nach hinten geschoben wird. In beiden Fällen dient als Bordstromquelle eine Solarstromquelle, die auf dem Deckel und/oder auf dem Gehäuse des Querstromgebläses bzw. dem dieses Gehäuse bildenden Windabweiser sitzt. Bei den bekannten Lösungen stellt das Gehäuse des Querstromgebläses einen über die Dachfläche nach oben vorstehenden Aufbau dar. Dies ist häufig aus optischen und/oder strömungstechnischen Gründen (erhöhter C_{w}-Wert) unerwünscht. Wenn das Gebläse in den Deckel integriert ist, wird die Abdichtung des Daches gegenüber Regen- und Waschwasser problematisch. Das Deckelgewicht erhöht sich. Die Deckelverstellmechanik muß dementsprechend kräftiger ausgeführt werden. Sitzt aber das Gebläse über der Dachhaut in dem Windabweiser, ist eine Belüftung bei geschlossenem Deckel ausgeschlossen.

Es ist ferner bekannt (DE-A-23 62 982, Abbildung 3), an der Außen- und Innenseite des Deckels eines Fahrzeugdaches Luftöffnungen oder Luftklappen vorzusehen, die gegebenenfalls variabel sind und unterhalb deren ein offensichtlich aus der Fahrzeugbatterie gespeister großvolumiger Lüfter vorgesehen ist, dessen Lüfterrad bei der veranschaulichten Ausführungsform einen Durchmesser hat, der größer als die Hälfte der Deckellängsabmessung ist. Desweiteren ist es bekannt (DE-A-35 40 546 A1 und DE-U-88 08 782), einen motorisch angetriebenen Lüfter und eine den Lüfter speisende Solarstromquelle bei einem Fahrzeughebedach unterhalb eines lichtdurchlässigen Deckels auf einem sich im mittleren Bereich der Dachöffnung in Fahrtrichtung erstrekkenden, breiten, dachfesten Tragelement zu befestigen. Bei einer abgewandelten Ausführungsform des letztgenannten Hebedaches sind ein Radiallüfter und eine zugehörige Solarstromquelle an der Unterseite des lichtdurchlässigen Hebedeckels angebracht (DE-U-88 15 676), so daß sie dessen Schwenkbewegung beim Ausstellen mitmachen. Diesen Anordnungen ist gemeinsam, daß ein erheblicher Teil der Deckelfläche für die Durchsicht ständig verlorengeht. Außerdem erhält das Dach insgesamt eine relativ große Bauhöhe, was für viele praktische Anwendungen unerwünscht ist.

Der im Anspruch 1 angegebenen Erfindung liegt die Aufgabe zugrunde, eine Belüftungsvorrichtung der eingangs genannten Art zu schaffen, die besonders unauffällig und platzsparend in das Fahrzeugdach integriert werden kann.

Diese Aufgabe wird erfindungsgemäß dadurch gelöst, daß die Lüfteranordnung in einen Deckelhimmel des Fahrzeugdaches eingebaut ist.

Ein Deckelhimmel in Form eines Schiebehimmels ist bei Fahrzeugdächern mit lichtdurchlässigem Deckel in der Regel ohnehin vorhanden (DE-A-29 23 904 und DE-A-33 23 396), insbesondere um den Lichteinfall in das Fahrzeug nach Belieben einstellen zu können. Bei der Belüftungsvorrichtung nach der Erfindung ist der Deckelhimmel zugleich als Träger für die Lüfteranordnung genutzt. Das Fahrzeugdach bleibt dadurch frei von über der Dachfläche liegenden Aufbauten. Es wird auch kein zusätzliches Tragelement für die Lüfteranordnung benötigt.

In weiterer Ausgestaltung der Erfindung ist zur Speisung der Lüfteranordnung eine Solarstromquelle, insbesondere eine mit dem lichtdurchlässigen Deckel zu einer Baueinheit verbundene Solarzellenanordnung, vorgesehen. Solche Baueinheiten aus Deckel und Solarzellenanordnung sind beispielsweise in den älteren Patentanmeldung P 40 06 756.4 und JP-A-1-18716 naher erläutert. Grundsätzlich kann aber auch eine andere Stromquelle, zum Beispiel die Kraftfahrzeugbatterie, oder eine an anderer Stelle des Fahrzeuges vorgesehene Solarstromquelle benutzt werden, um die Lüfteranordnung mit Energie zu versorgen. Die Solarzellenanordnung weist vorteilhaft eine Solarzellenschicht aus amorphem Halbleiterwerkstoff, insbesondere amorphem Silizium, auf, weil eine solche Schicht ohne weiteres eine Durchsicht gestattet. Gegebenenfalls kann die Solarzellenanordnung aber auch mindestens zum Teil von Solarzellen aus kristallinem Halbleiterwerkstoff gebildet sein, die zum Zwecke der Durchsicht unterbrochen oder in Form eines Rasters aufgebracht sein können.

Der Deckelhimmel ist zweckmäßig in an sich bekannter Weise (DE-A-33 23 396) als Sandwichplatte ausgebildet, da eine solche Platte auch innerhalb des in Kraftfahrzeugen anzutreffenden großen Temperaturbereiches die notwendige Festigkeit hat, um die Lüfteranordnung problemlos tragen zu können. Die Lüfteranordnung weist vorteilhaft mindestens einen in einen entsprechenden Ausschnitt des Deckelhimmels eingesetzten Axiallüfter auf. Axiallüfter haben einen besonders geringen spezifischen Energieverbrauch. Sie setzen daher die verfügbare Solarenergie wirkungsvoll in Luftströmung um. Außerdem bauen Axiallüfter sehr flach. Es stehen Axiallüfter handelsüblich zur Verfügung, deren Axialabmessung die Dicke eines üblichen Sandwich-Deckelhimmels nicht oder jedenfalls nicht wesentlich übersteigt. Dies ist im Hinblick auf die gewünschte niedrige Bauhöhe des Fahrzeugdaches und die dadurch erzielbare große Kopffreiheit von besonderer praktischer Bedeutung.

Die Lüfteranordnung kann - zweckmäßig in Form einer quer zur Fahrzeuglängsrichtung verlaufenden Lüftergruppe oder Lüfterzeile - in einem vorderen Teil des Deckelhimmels sitzen. Es kann ein in Fahrzeuglängsrichtung verschiebbarer Deckelhimmel (ein sogenannter Schiebehimmel) vorgesehen sein. Der Deckel bzw. die Dachöffnung stehen für die Durchsicht praktisch unbehindert zur Verfügung, wenn der Deckelhimmel in der üblichen Weise aus dem Bereich der Dachöffnung herausgeschoben wird. Weist das Fahrzeugdach einen Deckel auf, dessen hinteres Ende über die Dachfläche nach oben ausstellbar ist, kann in weiterer Ausgestaltung der Erfindung der die Lüfteranordnung tragende vordere Teil des Deckelhimmels in eine ausgestellte Lage verschwenkt werden, in welcher das vordere Ende des Deckelhimmels unterhalb des ausgestellten Deckels über die feste Dachfläche vorragt und dabei zweckmäßig an der Unterseite des ausgestellten Deckels anliegt. Auf diese Weise läßt sich einfach eine entlang der Deckelunterseite streichende Luftströmung ausbilden.

Ein verschiebbarer Deckelhimmel kann zweckmäßig selbst Teil einer Schalteranordnung bilden, welche die elektrisch leitende Verbindung zwischen der Bordstromquelle und der Lüfteranordnung wahlweise schließt bzw. öffnet. In einem solchen Fall können zusätzliche Schalter für die Bedienung der Lüfteranordnung entfallen. Die Ausbildung kann dabei zweckmäßig so getroffen sein, daß der Deckelhimmel in einer oder mehreren vorbestimmten Deckelhimmelstellungen die Bordstromquelle an die Lüfteranordnung anschaltet, während in allen anderen Deckelhimmelstellungen die elektrisch leitende Verbindung zwischen der Bordstromquelle und der Lüfteranordnung unterbrochen ist.

Ausführungsbeispiele der Erfindung sind im folgenden anhand der Zeichnung näher erläutert. Dabei zeigt:
- Fig. 1: einen Längsschnitt eines mit einer Belüftungsvorrichtung versehenen Fahrzeugdaches bei geschlossenem Deckel und in Außerbetriebsstellung befindlicher Belüftungsvorrichtung,
- Fig. 2: einen Schnitt entsprechend Fig. 1, wobei die Belüftungsvorrichtung in eine ihrer beiden Betriebsstellungen gebracht ist,
- Fig. 3: einen Längsschnitt durch das Fahrzeugdach bei voll zurückgeschobenem Deckelhimmel,
- Fig. 4: einen Längsschnitt durch das Fahrzeugdach bei ausgestelltem Deckel und in einer zweiten Betriebsstellung stehender Belüftungsvorrichtung,
- Fig. 5: eine perspektivische Draufsicht auf den Deckelhimmel mit eingebauter Lüfteranordnung,
- Fig. 6: in größerem Maßstab eine Teilansicht des Deckelhimmels nach Fig. 5,
- Fig. 7: einen Teilquerschnitt durch den Deckelhimmel nach den Fign. 5 und 6 entlang der Linie VII-VII der Fig. 6,
- Fign. 8 und 9: Teillängsschnitte durch den Deckelhimmel in der Stellung gemäß Fig. 1 bzw. Fig. 4,
- Fign. 10 und 11: Teillängsschnitte durch eine abgewandelte Ausführungsform des Deckelhimmels in den Stellungen gemäß Fig. 1 bzw. Fig. 4,
- Fig. 12: eine perspektivische Teildraufsicht auf eine Ausführungsform des Deckels gemäß den Fign. 1 bis 4,
- Fig. 13: in größerem Maßstab einen Teillängsschnitt des Deckelhimmels und einer zugehörigen Führung,
- Fig. 14: eine Draufsicht auf die Anordnung nach Fig. 13 sowie
- Fig. 15: einen Langsschnitt ähnlich den Fign. 1 bis 4 für eine abgewandelte Ausführungsform.

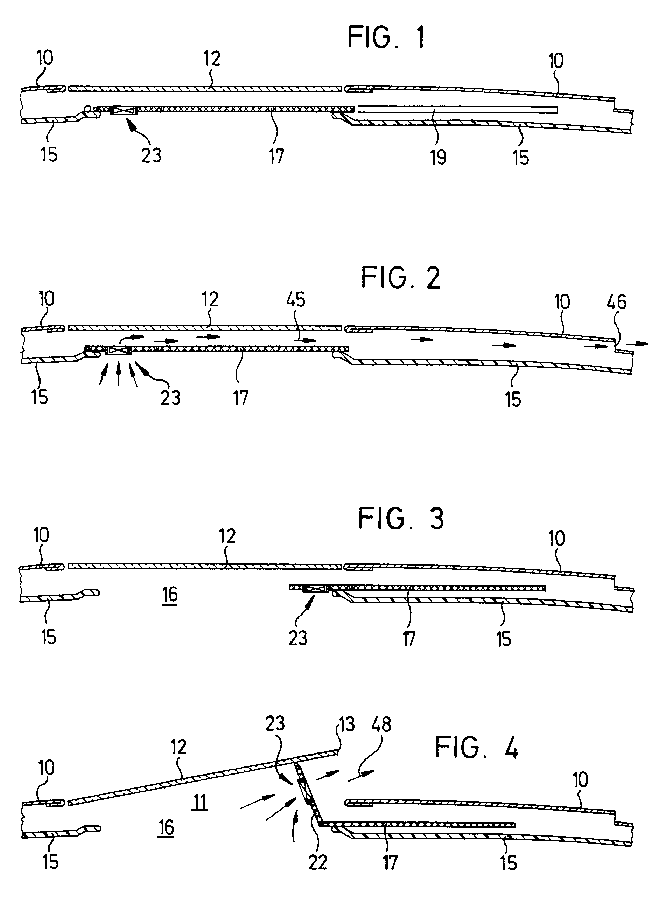

Bei dem in den Fign. 1 bis 4 veranschaulichten Fahrzeugdach ist in der festen Dachhaut 10 eine Dachöffnung 11 ausgebildet, die mittels eines lichtdurchlässigen starren Deckels 12 wahlweise verschlossen oder mindestens teilweise freigelegt werden kann. Der Deckel 12 läßt sich insbesondere zwischen einer Schließstellung (Fign. 1 bis 3) und einer ausgestellten Lage verstellen, in welcher das hintere Ende 13 des Deckels 12 über die von der Dachhaut 10 bestimmte Dachfläche nach oben ausgestellt ist. Zweckentsprechende Deckelverstellmechanismen sind bekannt und brauchen deshalb vorliegend nicht näher erläutert zu werden. Beispielsweise kann es sich um ein Hebedach (DE-A-23 41 203), ein Schiebehebedach (DE-A-29 23 904), ein Spoilerdach (DE 33-A-11 498), ein Mehrdeckeldach (DE-A-37 30 112) oder ein Spoiler/Lüfterdach (Patentanmeldung P 39 03 035) handeln.

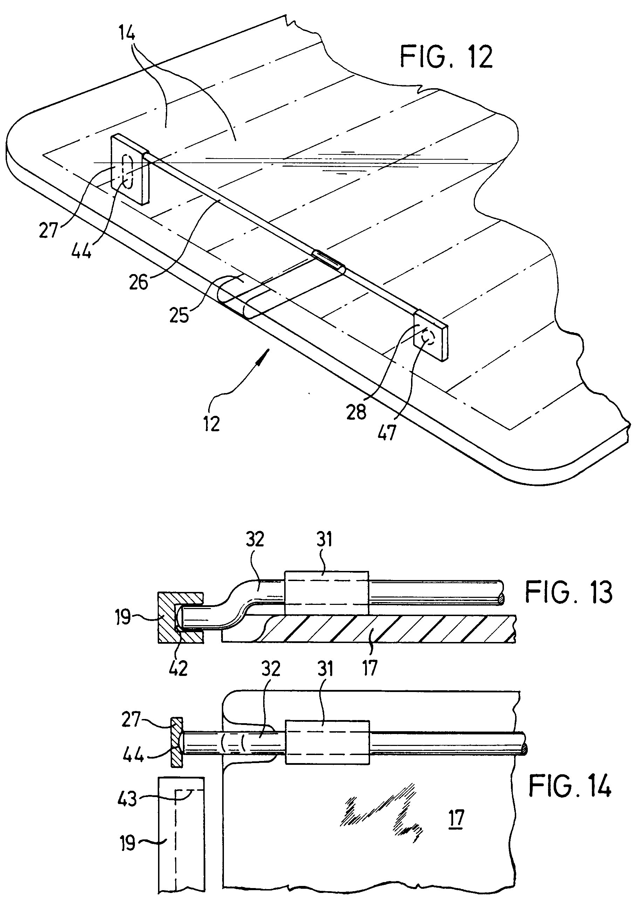

In den lichtdurchlässigen Deckel 12 ist eine Solarzellenanordnung integriert, die in Fig. 12 bei 14 angedeutet ist. Bevorzugt weist die Solarzellenanordnung 14 eine Solarzellenschicht aus amorphen Halbleiterwerkstoff, insbesondere amorphen Silizium, auf. Derartige Solarzellen-Glasdeckel sind bekannt (Aufsatz "Photovoltaic Hot Air Purge Systems" von P. Aschenbrenner, Sonderdruck aus Automotive Technology International, 1989 und DE-Patentanmeldung P 40 06 756).

Unterhalb der Dachhaut 10 sitzt in üblicher Weise ein fester Dachhimmel 15, in welchem eine Himmelöffnung 16 ausgebildet ist, die mit der Dachöffnung 11 in lotrechter Richtung im wesentlichen ausgerichtet ist. Die Himmelöffnung 16 kann mittels eines Deckelhimmels 17 in Form eines Schiebehimmels wahlweise verschlossen (Fign. 1 und 2) oder mindestens teilweise freigelegt werden (Fig. 3). Für diesen Zweck ist der Deckelhimmel 17 an beiden Seiten mit Gleitfüßen 18 versehen, die in Längsführungen 19, beispielsweise in Form von Gleitschienen, verschiebbar geführt sind, welche sich zu beiden Seiten der Himmelöffnung 16 in Fahrzeuglängsrichtung erstrecken. Bei der veranschaulichten Ausführungsform ist der Deckelhimmel 17 als Sandwichplatte ausgebildet. Sandwichplatten-Deckelhimmel sind an sich aus der DE-A-33 23 396 bekannt.

In einem Ausschnitt 21 eines vorderen Teils 22 des Deckelhimmels 17 ist eine insgesamt mit 23 bezeichnete Lüfteranordnung montiert, die im veranschaulichten Ausführungsbeispiel aus einer Gruppe von in Fahrzeugquerrichtung nebeneinandersitzenden einzelnen Axiallüftern 24 besteht. Axiallüfter haben bezogen auf den erzielbaren Luftdurchsatz einen besonders niedrigen spezifischen Energieverbrauch, und sie stehen in solchen Abmessungen handelsüblich zur Verfügung, daß ihre Dicke (d.h. Axialabmessung) nicht oder nicht wesentlich größer als die Dicke eines Sandwichplatten-Deckelhimmels ist. Der Einbau der Lüfteranordnung 23 kann daher ohne Vergrößerung der Gesamtbauhöhe des Fahrzeugdaches bzw. ohne Verminderung der Kopffreiheit erfolgen. Die Lüfteranordnung 23 wird von einer Solarstromquelle gespeist, die im erläuterten Ausführungsbeispiel von der in den Deckel 12 integrierten Solarzellenanordnung 14 gebildet wird. Dabei ist die Anordnung vorliegend so getroffen, daß der Deckelhimmel 17 selbst Teil einer Schalteranordnung bildet, welche die elektrisch leitende Verbindung zwischen der Solarzellenanordnung 14 und der Lüfteranordnung 23 wahlweise schließt bzw. öffnet. Für diesen Zweck ist, wie in Fig. 12 veranschaulicht ist, die Solarzellenanordnung 14 über einen Bandleiter 25 mit einem elektrischen Leiter 26 verbunden, der sich an der Unterseite des Deckels 12 nahe der einen Deckelseite in Deckellängsrichtung erstreckt. Der Leiter 26 sorgt für eine elektrisch leitende Verbindung zwischen dem Bandleiter 25 und einem vorderen Kontaktteil 27 sowie einem hinteren Kontaktteil 28 (Fig. 12). Die Kontaktteile 27 und 28 können beispielsweise an einem den Deckel 12 tragenden, nicht veranschaulichten Deckelinnenblech abgestützt sein, wobei sie gegenüber dem Deckelinnenblech elektrisch isoliert sind. Eine entsprechende Ausbildung kann auf der in Fig. 12 nicht dargestellten anderen Deckelseite vorgesehen sein.

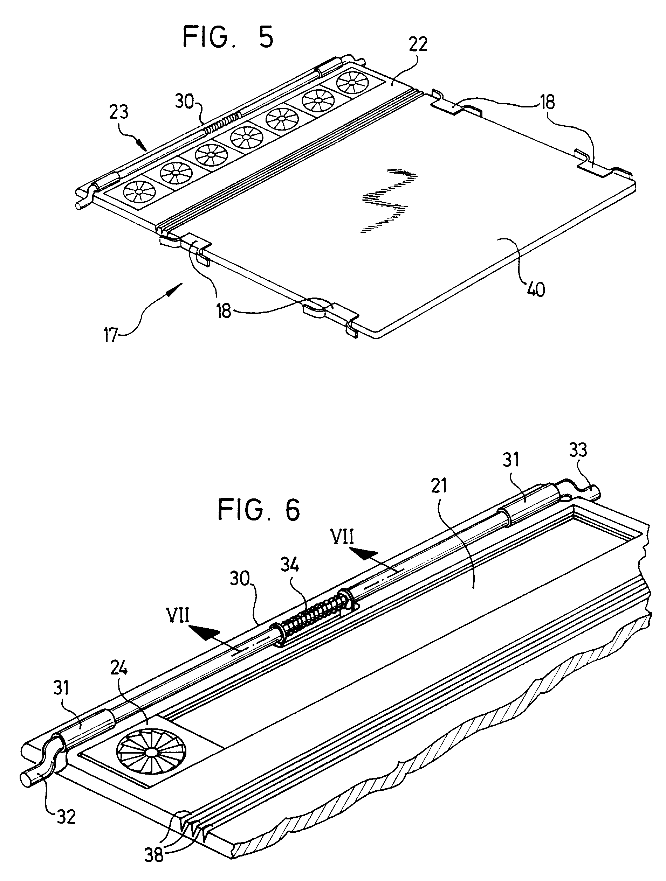

Auf dem Deckelhimmel 17 sind nahe dessen vorderem Ende 30 Stößellager 31 angebracht (Fign. 6, 13 und 14), in denen jeweils ein Kontaktstößel 32 bzw. 33 quer zur Fahrzeuglängsrichtung verschiebbar geführt ist. Zwischen den einander zugewendeten Enden der Kontaktstößel 32 und 33 sitzt eine Druckfeder 34, welche die Kontaktstößel 32 und 33 in nach außen weisender Richtung vorspannt. An den einander zugewendeten Enden der Kontaktstößel 32 und 33 ist jeweils eine Handhabe 35 bzw. 36 befestigt. Die Handhaben 35 und 36 ragen durch eine Öffnung 37 des Deckelhimmels 17 nach unten vor, und sie erlauben es, die Kontaktstößel 32 und 33 entgegen der Kraft der Feder 34 aufeinanderzu zu bewegen.

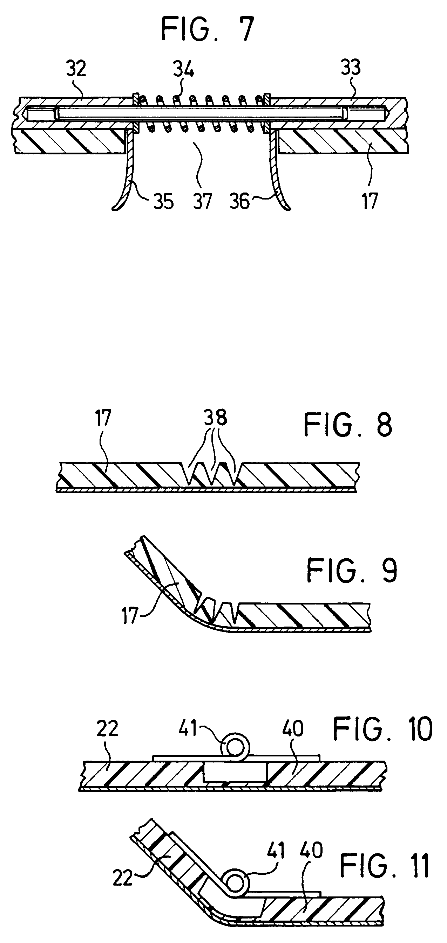

Bei der veranschaulichten Ausführungsform kann der vordere Teil 22 des Deckelhimmels 17 nach oben abgeknickt werden, um den Deckelhimmel nach Ausstellen des Deckels 12 in die in Fig. 4 veranschaulichte Lage zu bringen, in welcher das vordere Ende 30 des Deckelhimmels 17 über die Dachhaut 10 vorragt und dabei vorzugsweise an der Unterseite des ausgestellten Deckels 12 anliegt. Für diesen Zweck ist der Deckelhimmel 17 im Bereich des hinteren Endes des vorderen Deckelhimmelteils 12 mit querverlaufenden Einschnitten oder Nuten 38 versehen, die sich nach oben erweitern und dadurch ein Hochstellen des vorderen Deckelhimmelteils 22 erlauben (Fig. 9). Eine solche Maßnahme ist an sich aus der DE-A-38 17 681 bekannt. Der vordere Deckelhimmelteil 22 kann mit dem hinteren Hauptteil 40 auch über Drahtwendeln 41 gelenkig verbunden sein, wie dies in den Fign. 10 und 11 dargestellt und an sich aus der DE-A-34 17 340 bekannt ist. Andere Scharnierformen lassen sich gleichfalls anwenden.

Fig. 1 zeigt den Deckelhimmel 17 in einer Stellung, in welcher er die Himmelöffnung 16 verschließt, während die elektrische Verbindung zwischen der Solarzellenanordnung 14 und der Lüfteranordnung 23 unterbrochen ist. In dieser Deckelhimmelstellung greifen die nach außen abstehenden Enden der Kontaktstößel 32 und 33 - ebenso wie die Gleitfüße 18 - in Führungsbahnen 42 ein, die von den Längsführungen 19 gebildet werden (Fig. 13). Eine vordere Begrenzung 43 der Führungsbahn 42 verhindert, daß der Deckelhimmel 17 ungewollt über die in Fig. 1 veranschaulichte Stellung hinaus weiter nach vorne rutscht. Werden jedoch die Handhaben 35 und 36 entgegen der Kraft der Feder 34 einander genähert, können die Kontaktstößel 32 und 33 so weit nach innen verlagert werden, daß sie von der vorderen Begrenzung 43 der zugehörigen Führungsbahn 42 freikommen. Der Deckelhimmel 17 läßt sich dann noch ein kurzes Stück weiter nach vorne in die in Fig. 2 gezeigte Stellung bringen, in welcher entsprechend Fig. 14 die Kontaktstößel 32 und 33 in eine Öffnung 44 des vorderen Kontaktteils 27 auf der betreffenden Dachseite einrasten und dadurch einen elektrischen Kontakt zwischen der Solarzellenanordnung 14 und der Lüfteranordnung 23 herstellen. Die Axiallüfter 24 werden aus der Solarzellenanordnung 14 gespeist, und sie erzeugen einen bei 45 angedeuteten Luftstrom, der zur Standbelüftung bei geschlossenem Dach aus dem Innenraum des Fahrzeuges abgezogen wird und durch den Spalt zwischen dem Deckel 12 und dem Deckelhimmel 17 streicht.

In der in Fig. 2 angedeuteten Weise können über der Heckscheibe Luftauslässe 46 vorgesehen sein, über welche die Warmluft das Fahrzeug verläßt. Die von der Lüfteranordnung 23 geförderte Luft kann aber beispielsweise auch über die ohnehin vorhandenen Wasserabläufe des Daches aus dem Fahrzeug herausgeleitet werden. Um insbesondere während der Fahrt Licht in das Fahrzeug gelangen zu lassen, kann der Deckelhimmel entsprechend Fig. 3 zurückgeschoben werden.

Es kann aber auch gemäß Fig. 4 für eine Standbelüftung bei ausgestelltem Deckel 12 gesorgt werden. Für diesen Zweck wird der Deckelhimmel 17 in der Langsverstellrichtung in eine Zwischenstellung gebracht. Durch Zusammendrücken der Handhaben 35 und 36 werden die Kontaktstößel 32 und 33 aus den Führungsbahnen 42 herausgezogen, worauf der vordere Teil 22 des Deckelhimmels 17 hochgeklappt werden kann. Die Handhaben 35 und 36 werden in einer Stellung freigegeben, in welcher die Kontaktstößel 32 und 33 in eine Öffnung 47 des hinteren Kontaktteils 28 auf der betreffenden Dachseite einrasten. Dadurch ist wiederum eine leitende Verbindung zwischen der Solarzellenanordnung 14 und der Lüfteranordnung 23 hergestellt. Es wird ein an der Unterseite des Deckels 12 entlangstreichender, bei 48 angedeuteter Luftstrom ausgebildet, der aus dem Fahrzeuginnenraum über die Axiallüfter 24 ins Freie gefördert wird. Gegebenenfalls kann die Förderrichtung der Lüfter 24 auch umgekehrt sein, so daß der Luftstrom 48 in das Fahrzeuginnere hinein gerichtet ist.

Es versteht sich, daß die vorstehend erläuterte abknickbare Ausbildung des Deckelhimmels kein Zwangsmerkmal darstellt. Der Deckelhimmel kann vielmehr auch durchgehend starr ausgebildet sein und gegebenenfalls die Lüfteranordnung an anderer oder zusätzlich auch an anderer Stelle als im vorderen Bereich tragen. Ein solcher nicht abknickbarer Deckelhimmel mit integrierter Lüfteranordnung eignet sich unter anderem für Schiebedächer (DE-A-36 40 168) und Lüfterdächer mit vorne absenkbarem Deckel (DE-A-38 07 961).

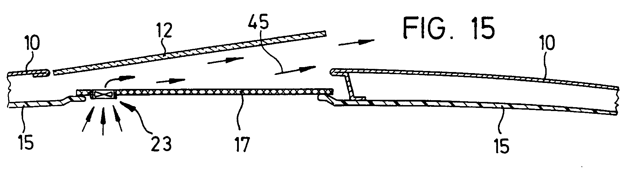

In Fig. 15 ist eine abgewandelte Ausführungsform veranschaulicht, bei welcher das Fahrzeugdach als Hebedach ausgebildet ist, unter dessen ausstellbarem Deckel 12 ein die Lüfteranordnung 23 tragender Deckelhimmel 17 fest oder gegebenenfalls auch gemeinsam mit dem verschwenkbar angeordnet ist. Da bei festem Deckelhimmel dieser nicht als Teil der Schaltanordnung zum Ein- und Ausschalten der Lüfter 24 nutzbar ist, ist ein getrennt betätigbarer Schalter vorzusehen. Ein solcher unabhängig von einer Verstellbewegung des Deckelhimmels betätigter Schalter kann bei anderen Ausführungsformen, zum Beispiel denjenigen nach den Fign. 1 bis 14, gleichfalls vorgesehen sein. Falls erwünscht, läßt sich ein derartiger Schalter über eine Schaltuhr und / oder über eine Fernsteuerung betätigen, um beispielsweise das abgestellte Fahrzeug eine bestimmte Zeitspanne vor der Abfahrt zu belüften. Dies kommt insbesondere dann in Betracht, wenn die Lüfteranordnung aus der Fahrzeugbatterie gespeist wird.

## Patentansprüche

1. Belüftungsvorrichtung mit einer Lüfteranordnung (23), die aus einer Bordstromquelle gespeist ist, für ein Fahrzeugdach, das mindestens einen starren Deckel (12) zum wahlweisen Verschließen oder mindestens teilweisen Freilegen einer Dachöffnung (11) aufweist, **dadurch gekennzeichnet,** daß die Lüfteranordnung (23) in einen Deckelhimmel (17) des Fahrzeugdaches eingebaut ist.

2. Belüftungsvorrichtung nach Anspruch 1, dadurch gekennzeichnet, daß die der Speisung der Lüfteranordnung (23) dienende Bordstromquelle eine Solarstromquelle (Solarzellenanordnung 14) ist.

3. Belüftungsvorrichtung nach Anspruch 2, dadurch gekennzeichnet, daß der Deckel (12) lichtdurchlässig ausgebildet ist und daß als Solarstromquelle eine mit dem lichtdurchlässigen Deckel (12) zu einer Baueinheit verbundene Solarzellenanordnung (14) vorgesehen ist.

4. Belüftungsvorrichtung nach Anspruch 2 oder 3, dadurch gekennzeichnet, daß die Solarzellenanordnung (14) eine Solarzellenschicht aus amorphem Halbleiterwerkstoff, insbesondere amorphem Silizium, aufweist.

5. Belüftungsvorrichtung nach einem der vorhergehenden Ansprüche, dadurch gekennzeichnet, daß der Deckelhimmel (17) als Sandwichplatte ausgebildet ist.

6. Belüftungsvorrichtung nach einem der vorhergehenden Ansprüche, dadurch gekennzeichnet, daß die Lüfteranordnung (23) mindestens einen in einen entspre chenden Ausschnitt (21) des Deckelhimmels (17) eingesetzten Axiallüfter (24) aufweist.

7. Belüftungsvorrichtung nach einem der vorhergehenden Ansprüche, dadurch gekennzeichnet, daß die Lüfteranordnung (23) in einem vorderen Teil (22) des Deckelhimmels (17) sitzt.

8. Belüftungsvorrichtung nach einem der vorhergehenden Ansprüche, dadurch gekennzeichnet, daß die Lüfteranordnung (23) aus einer Reihe von Lüftern (24) besteht.

9. Belüftungsvorrichtung nach einem der vorhergehenden Ansprüche, dadurch gekennzeichnet, daß der Deckelhimmel (17) in Fahrzeuglängsrichtung verschiebbar geführt ist.

10. Belüftungsvorrichtung nach Ansprüchen 7 und 9 für ein Fahrzeugdach mit einem Deckel, dessen hinteres Ende über die Dachfläche nach oben ausstellbar ist, dadurch gekennzeichnet, daß der die Lüfteranordnung (23) tragende vordere Teil (22) des Deckelhimmels (17) in eine ausgestellte Lage verschwenkbar ist, in welcher das vordere Ende (30) des Deckelhimmels (17) unterhalb des ausgestellten Deckels (12) über die feste Dachfläche (Dachhaut 10) vorragt.

11. Belüftungsvorrichtung nach Anspruch 10, dadurch gekennzeichnet, daß das vordere Ende (30) des mit seinem vorderen Teil (22) ausgestellten Deckelhimmels (17) an der Unterseite des ausgestellten Deckels (12) anliegt.

12. Belüftungsvorrichtung nach Anspruch 9, dadurch gekennzeichnet, daß der Deckelhimmel (17) selbst Teil einer Schalteranordnung bildet, welche die elektrisch leitende Verbindung zwischen der Bordstromquelle (Solarzellenanordnung 14) und der Lüfteranordnung (23) wahlweise schließt bzw. öffnet.

13. Belüftungsvorrichtung nach Anspruch 12, dadurch gekennzeichnet, daß der Deckelhimmel (17) in einer oder mehreren Deckelhimmelstellungen die Bordstromquelle (Solarzellenanordnung 14) an die Lüfteranordnung (23) anschaltet, während in allen anderen Deckelhimmelstellungen die elektrisch leitende Verbindung zwischen der Bordstromquelle und der Lüfteranordnung unterbrochen ist.

## Claims

1. A ventilating device, with a fan arrangement (23) supplied by an on-board power source, for a vehicle roof having at least one rigid cover (12) for optionally closing or at least partially opening a roof aperture (11), characterised in that the fan arrangement (23) is installed into a cover lining (17) of the vehicle roof.

2. A ventilating device according to Claim 1, characterised in that the on-board power source which serves to supply the fan arrangement (23) is a solar power source (solar cell arrangement 14).

3. A ventilating device according to Claim 2, characterised in that the cover (12) is light-transmissive and in that a solar cell arrangement (14) combined with the light-transmissive cover (12) to form one structural unit is provided as the solar power source.

4. A ventilating device according to Claim 2 or 3, characterised in that the solar cell arrangement (14) comprises a solar cell layer of amorphous semi-conductor material, particularly amorphous silicon.

5. A ventilating device according to one of the preceding Claims, characterised in that the cover lining (17) is constructed as a sandwich panel.

6. A ventilating device according to one of the preceding Claims, characterised in that the fan arrangement (23) comprises at least one axial fan (24) which is inserted into a corresponding cut-out (21) in the cover lining (17).

7. A ventilating device according to one of the preceding Claims, characterised in that the fan arrangement (23) is positioned in a forward part (22) of the cover lining (17).

8. A ventilating device according to one of the preceding Claims, characterised in that the fan arrangement (23) consists of a series of fans (24).

9. A ventilating device according to one of the preceding Claims, characterised in that the cover lining (17) is guided for displacement in the longitudinal direction of the vehicle.

10. A ventilating device according to Claims 7 and 9 for a vehicle roof with a cover the rear end of which can be pushed out upwardly above the roof surface, characterised in that the forward part (22) of the cover lining (17) which carries the fan arrangement (23) can be pivoted into a pushed-out position in which the forward end (30) of the cover lining (17) projects over the fixed roof area (roof skin 10) below the pushed-out cover (12).

11. A ventilating device according to Claim 10, characterised in that the forward end (30) of the cover lining (17), the forward part (22) of which is pushed out, bears on the underside of the pushed-out cover (12).

12. A ventilating device according to Claim 9, characterised in that the cover lining (17) itself forms part of a switch arrangement which optionally makes or breaks the electrically conductive connection between the on-board power source (solar cell arrangement 14) and the fan arrangement (23).

13. A ventilating device according to Claim 12, characterised in that in one or more positions of the cover lining (17), said cover lining switches on the on-board power source (solar cell arrangement 14), connecting it to the fan arrangement (23), while in all other positions of the cover lining the electrically conductive connection between the on-board power source and the fan arrangement is broken.

## Revendications

1. Dispositif de ventilation pour un toit de véhicule comportant un aérateur (23) alimenté par une source de courant située à bord du véhicule qui présente un couvercle (12) rigide pouvant à volonté obturer ou libérer au moins partiellement une ouverture (11), caractérisé en ce que l'aérateur (23) est incorporé au couvercle constituant le ciel mobile (17) du toit du véhicule.

2. Dispositif selon la revendication 1, caractérisé en ce que la source d'alimentation de l'aérateur (23) est une source électrique utilisant l'énergie solaire (dispositif à cellules solaires 14).

3. Dispositif selon la revendication 2, caractérisé en ce que le couvercle (12) est transparent et qu'il forme un ensemble avec le dispositif à cellule solaires (14).

4. Dispositif selon la revendication 2 ou 3, caractérisé en ce que le dispositif à cellules solaires (14) comporte une couche photosensible faite d'un semi-conducteur amorphe, en particulier du silicium amorphe.

5. Dispositif selon une des revendications précédentes, caractérisé en ce que le ciel mobile (17) est une plaque, composée lamellaire.

6. Dispositif selon une des revendications précédentes, caractérisé en ce que l'aérateur (23) comporte au moins un aérateur axial (24) monté dans une découpe correspondante (21) du ciel mobile (17).

7. Dispositif selon une des revendications précédentes, caractérisé en ce que l'aérateur (23) est placé dans la partie avant (22), du ciel mobile (17).

8. Dispositif selon une des revendications précédentes, caractérisé en ce que l'aérateur (23) est constitué d'une série d'aérateur élémentaires (24).

9. Dispositif selon une des revendications précédentes, caractérisé en ce que le ciel mobile (17) peut coulisser selon la direction longitudinale du véhicule.

10. Dispositif selon les revendications 7 et 9, pour un véhicule dont la partie arrière du couvercle (12) peut être relevée au-dessus du toit, caractérisé en ce que la partie avant du ciel mobile (17) portant l'aérateur (23) peut être basculée dans une position déterminée pour laquelle le bord avant (30) du ciel mobile (17) se trouve dressé sous le couvercle (12) relevé, au-dessus de la partie rigide du toit (10).

11. Dispositif selon la revendication 10, caractérisé en ce que le bord avant (30) du ciel mobile (17), en position dressée, est au contact de la face inférieure du couvercle (12) relevé.

12. Dispositif selon la revendication 9, caractérisé en ce que le ciel mobile (17) est lui-même un composant du circuit qui établit ou coupe à volonté la liaison électrique entre la source de courant à bord (dispositif à cellules solaires 14) et l'aérateur (23).

13. Dispositif selon la revendication 12, caractérisé en ce que le ciel mobile (17), dans une ou plusieurs de ses positions, établit la liaison électrique entre la source de courant à bord et l'aérateur, et le coupe dans toutes les autres positions.
